# EUROPÄISCHE PATENTSCHRIFT

(11) **EP 2 470 805 B1**
(45) Veröffentlichungstag und Bekanntmachung des Hinweises auf die Patenterteilung: **12.10.2016**
(21) Anmeldenummer: 10745198.1
(22) Anmeldetag: 11.08.2010
(51) Int. Cl.: F16C 33/30, B21D 53/10

(54) **BAUELEMENT EINER WÄLZLAGERUNG**
COMPONENT OF A ROLLING CONTACT BEARING
COMPOSANT D'UN PALIER À ROULEMENT

(30) Priorität: 27.08.2009 DE 102009039073
(43) Veröffentlichungstag der Anmeldung: 04.07.2012
(73) Patentinhaber: Aktiebolaget SKF, 415 50 Göteborg (SE)
(72) Erfinder: BREUNIG, Heinz, 63743 Aschaffenburg (DE); HAUCK, Helmut, 97502 Euerbach (DE); HORLING, Peter, 97453 Schonungen-Mainberg (DE); PICKEL, Edgar, 97334 Sommerach (DE)
(74) Vertreter: Schonecke, Mitja
(86) Internationale Anmeldenummer: PCT/EP2010/061653
(87) Internationale Veröffentlichungsnummer: WO 2011/023535

(56) Entgegenhaltungen:
- WO-A1-2009/045983
- DE-A1- 19 854 523
- US-A- 3 431 625
- US-A- 3 845 667
- US-A1- 2002 025 095
- US-A1- 2008 277 931

## Beschreibung

Die Erfindung betrifft ein Bauelement einer Wälzlagerung.

Wälzlagerungen werden in nahezu allen Bereichen der Technik eingesetzt. Dabei sind Wälzlager oftmals genormte austauschbare Maschinenelemente. Ihre hohe Tragfähigkeit bei geringer Bauhöhe ermöglicht gedrängte und leichte Konstruktionen.

Bei vielen Einsatzfällen ist wenigstens ein Bauelement der Wälzlagerung mit einem bogenartigen Bereich auszubilden, sei es nun das Blechlaufbahnelement eines Kugellagers selbst oder auch ein Lagerträger der Wälzlagerung.

Ein gattungsbildendes Bauelement ist aus der US 3 845 667 A bekannt, wobei es sich um eine Nockenwelle handelt, welche mittels Hochgeschwindigkeitsumformung hergestellt wird Ein weiteres Bauelement einer Wälzlagerung ist aus der US 3 431 625 A bekannt. Das als Trägerplatte ausgebildete Bauelement wird um ein an einer Welle angeordnetes Lager gebogen, um das Lager an der Welle zu sichern. Da das Biegen der Trägerplatte durch Magnetimpulsumformen erfolgt, weist das geformte Bauelement in den gebogenen und ungebogenen Bereichen gleiche Kornstruktur auf

Des Weiteren ist ein auf Magnetimpulsumformen basierendes Verfahren zum miteinander Befestigen von unterschiedlichen Teilen aus der DE 198 54 523 A1 sowie der US 2008/277931 A1 bekannt.

Aus der US 2002/025095 A1 ist ein Lagerring bekannt, bestehend aus zwei Ringteilen, die durch Pressen miteinander verbunden sind.

Eine Aufgabe der Erfindung ist es, ein Bauelement einer Wälzlagerung zu schaffen, so dass ein bogenartiger Bereich des Bauelements einfach, kostengünstig und mit hervorragenden Materialeigenschaften herstellbar ist.

Die Aufgabe wird durch den Gegenstand des Anspruchs 1 gelöst. Vorteilhafte Ausgestaltungen sind in den Unteransprüchen beschrieben.

Gemäß Anspruch 1 beinhaltet ein Bauelement einer Wälzlagerung folgende Merkmale:
- Das Bauelement ist aus einem elektrisch leitfähigen Material, das eine Kornstruktur aufweist, ausgebildet,
- das Bauelement umfasst wenigstens einen durch ein Umformen erzeugten, gebogenen und einem sich daran anschließenden ungebogenen Bereich, und
- das Bauelement ist frei von einer dem Umformen nachfolgenden Rekristallisationsbehandlung in beiden Bereichen hinsichtlich Größe und Form der Körner mit einer gleichen Kornstruktur ausgebildet,
wobei das Bauelement als ein Aussenring der Wälzlagerung oder ein W-förmiger Zylinderrollenlagerkäfig aus Blech ausgebildet ist.

Dabei ist es unter anderem bekannt, dass die Art der Kornstruktur, insbesondere Form und Größe der Körner, wichtige Parameter darstellen, die unter anderem Festigkeit, Härte, Kerbschlagzähigkeit und Spannungen beeinflussen. So ist beispielsweise eine feine Kornstruktur mit kleinen Korngrößen ein wirkungsvolles Mittel sowohl die Festigkeit als auch die Zähigkeit zu verbessern.

Gemäß der Erfindung wird ein Bauelement einer Wälzlagerung, das einen durch Umformen erzeugten gebogenen Bereich und einen sich daran anschließenden ungebogenen Bereich umfasst, die Biegung so hergestellt, dass beide Bereiche hinsichtlich Größe und Form der Körner eine gleiche Kornstruktur beibehalten, also im gebogenen Bereich gegenüber dem ungebogenen, insbesondere keine Kornstreckung auftritt - und das alles, ohne dass dem Umformen nachfolgend eine Rekristallisationsbehandlung, insbesondere ein Rekristallisationsglühen durchgeführt werden muss. Dazu ist gemäß der Erkenntnis der Erfindung zum Umformen ein Verfahren mit extrem hohen Umformgeschwindigkeiten einzusetzen, wozu sich insbesondere Magnetimpulsaber auch Explosionsumformverfahren eignen.

Beim Magnetimpulsumformen wird ein hinreichend elektrisch leitfähiges Werkstück durch ein Magnetimpulsfeld derart beschleunigt, dass die gewünschte Umformung stattfindet. Dabei induziert das in einer elektrischen Spule erzeugte impulsartige elektromagnetische Feld im umzuformenden elektrisch leitfähigen Werkstück Wirbelströme, die im Zusammenspiel mit dem von der Spule erzeugten Magnetfeld das Werkstück plastisch umformen.

Als Alternative zum Magnetimpulsumformen kann auch ein Explosionsumformverfahren verwendet werden, wobei gegenüber dem Magnetimpulsumformen zur Bereitstellung und Beherrschung der notwendigen Energien größere Sicherheitsvorkehrungen zu treffen sind.

Weiterhin ist beispielsweise das Magnetimpulsumformen auch hinsichtlich Nachhaltigkeitsaspekten von besonderem Vorteil und in hohem Grade automatisierbar, womit mit Vorteil aufgrund der wenigen und exakt einstellbaren Prozessparameter eine hohe Reproduzierbarkeit sichergestellt ist. Hierdurch lassen sich weitere deutliche Kosteneinsparpotentiale bei der Produktherstellung realisieren.

Mit den vorausgehend beschriebenen Verfahren lässt sich dabei mit besonderem Vorteil die beispielsweise aus der Figur 8 der DE 10 2007 060 968 A1 bekannte Hülse einfach und kostengünstig aus einem hohlzylindrischen Stahlblechrohling mit den beschriebenen hervorragenden Materialeigenschaften hinsichtlich der Kornstruktur erzeugen, wobei die stirnseitige 90°-Umbiegung wie auch der im Mittenbereich angeordnete Absatz beispielsweise durch das Magnetimpulsverfahren erzeugt sind. In anderen Ausführungsformen kann das Magnetimpulsverfahren gleichzeitig oder in separaten Schritten bei vorausgehend genannter Hülse neben dem Umformen auch zu einem Kalibrieren, wenigstens von Teilbereichen der Hülse, zum Erzeugen von den Hülsenmantel durchdringenden Öffnungen und/oder zum Ablängen oder Trennen der Hülse genutzt werden.

In anderen Ausführungsformen lassen sich natürlich auch andere Bauelemente von Wälzlagerungen anstelle der vorausgehend beschriebenen Hülse der DE 10 2007 060 968 A1 aus einem hohlzylindrischen Rohling so herstellen. Exemplarisch sei dazu auf den Außenring des Fahrradtretlagers der DE 10 2004 045 014 A1 und den W-förmigen Zylinderrollenlagerkäfig der DE 17 43 062 U oder DE 19 13 351 A1 hingewiesen. Hinsichtlich weiterer mit dem Magnetimpulsverfahren neben dem Umformen bewerkstelligbarer Operationen gilt das vorausgehend zur Hülse Beschriebene natürlich entsprechend, wobei beim Käfig insbesondere die Käfigtaschen durch eine entsprechende Trennoperation erzeugbar sind.

## Patentansprüche

1. Bauelement einer Wälzlagerung, umfassend folgende Merkmale:
- Das Bauelement ist aus einem elektrisch leitfähigen Stahlmaterial das eine Kornstruktur aufweist, ausgebildet,
- das Bauelement umfasst wenigstens einen durch ein Umformen erzeugten, gebogenen und einem sich daran anschließenden ungebogenen Bereich, und
- das Bauelement ist frei von einer dem Umformen nachfolgenden Rekristallisationsbehandlung in beiden Bereichen hinsichtlich Größe und Form der Körner mit einer gleichen Kornstruktur ausgebildet, **dadurch gekennzeichnet, dass** das Bauelement ein Bauelement aus der Gruppe der Bauelemente ist, die aus einem Außenring der Wälzlagerung und einem W-förmigen Zylinderrollenlagerkäfig besteht,
- das Bauelement ist aus einem Blech ausgebildet.

2. Bauelement nach Anspruch 1, wobei die Körner des gebogenen Bereichs gegenüber den Körnern des ungebogenen Bereichs unverformt, insbesondere frei von einer Kornstreckung ausgebildet sind.

3. Bauelement nach einem der Ansprüche 1 oder 2, wobei das Bauelement unumgeformt hülsen-, rohr-, ring- oder hohlzylinderartig ausgebildet ist.

4. Bauelement nach einem der Ansprüche 1 bis 3, wobei der ungebogene Bereich einer 25°- bis 90°-Umbiegung zugehört.

5. Bauelement nach einem der Ansprüche 1 bis 4, wobei der umgebogene Bereich mit Hilfe eines Magnetimpuls- oder Explosionsumformverfahrens erzeugt ist.

6. Bauelement nach einem der Ansprüche 1 bis 5, wobei das Bauelement wenigstens einen Formbereich aufweist, mit dem es an seiner Einbauumgebung zum Befestigen vorgesehen ist.

7. Bauelement nach einem der Ansprüche 1 bis 6, wobei das Bauelement aus wenigstens zwei ursprünglich separaten Teilen besteht.

8. Bauelement nach Anspruch 7, wobei die beiden Teile aus unterschiedlichen Materialien bestehen.

9. Bauelement nach einem der Ansprüche 7 oder 8, wobei ein Verbinden der beiden Teile miteinander mit dem Umformen mit durchgeführt ist.

## Claims

1. Component of a rolling contact bearing, comprising the following features:
- the component is made of an electrically conductive steel material that has a grain structure,
- the component comprises at least one bent region created by forming and, adjoining this, a non-bent region, and
- the component is made with an identical grain structure, in both regions with respect to size and shape of the grains, without a re-crystallization treatment following the forming, **characterized in that** the component is a component from the group of components that consists of an outer ring of the rolling contact bearing and a W-shaped cylinder rolling bearing cage,
- the component is made of sheet metal.

2. Component according to Claim 1, wherein the grains of the bent region, in comparison to the grains of the non-bent region, are non-deformed, in particular free from grain elongation.

3. Component according to either of Claims 1 and 2, wherein the component is designed, in the non-formed state, in the manner of a sleeve, a pipe, a ring or a hollow cylinder.

4. Component according to one of Claims 1 to 3, wherein the non-bent region belongs to a 25° to 90° bend.

5. Component according to one of Claims 1 to 4, wherein the bent region is produced with the aid of a magnetic impulse forming or explosion forming method.

6. Component according to one of Claims 1 to 5, wherein the component has at least one formed region with which it is provided for attachment to its installation surroundings.

7. Component according to one of Claims 1 to 6, wherein the component consists of at least two originally separate parts.

8. Component according to Claim 7, wherein the two parts are made of different materials.

9. Component according to either of Claims 7 and 8, wherein joining the two parts to one another is carried out at the same time as the forming.

## Revendications

1. Composant d'un palier à roulement, comprenant les caractéristiques suivantes :
- le composant est réalisé à partir d'un matériau en acier électriquement conducteur, qui présente une structure de grain,
- le composant comprend au moins une région cintrée, produite par formage par déformation et une région non cintrée s'y raccordant, et
- le composant est réalisé dans les deux régions avec une structure de grain identique en ce qui concerne la taille et la forme des grains sans traitement de recristallisation subséquent au formage par déformation,
**caractérisé en ce que** le composant est un composant parmi le groupe des composants qui se compose d'une bague extérieure du palier à roulement et d'une cage de palier à rouleaux cylindriques en forme de W,
- le composant est réalisé en tôle.

2. Composant selon la revendication 1, dans lequel les grains de la région cintrée ne sont pas déformés par rapport aux grains de la région non cintrée, en particulier sont réalisés sans allongement des grains.

3. Composant selon l'une quelconque des revendications 1 ou 2, dans lequel le composant est réalisé en forme de douille, de tube, de bague ou de cylindre creux sans formage par déformation.

4. Composant selon l'une quelconque des revendications 1 à 3, dans lequel une courbure de 25° à 90° est associée à la région non cintrée.

5. Composant selon l'une quelconque des revendications 1 à 4, dans lequel la région cintrée est produite à l'aide d'un procédé de formage par déformation explosive ou par impulsion magnétique.

6. Composant selon l'une quelconque des revendications 1 à 5, dans lequel le composant présente au moins une région de formage avec laquelle il est prévu pour être fixé à son environnement d'installation.

7. Composant selon l'une quelconque des revendications 1 à 6, dans lequel le composant se compose d'au moins deux parties initialement séparées.

8. Composant selon la revendication 7, dans lequel les deux parties se composent de matériaux différents.

9. Composant selon l'une quelconque des revendications 7 ou 8, dans lequel une connexion des deux parties l'une avec l'autre est effectuée conjointement avec le formage par déformation.
